# EUROPEAN PATENT SPECIFICATION

(11) **EP 3 116 780 B1**
(45) Date of publication and mention of the grant of the patent: **28.02.2018**
(21) Application number: 15712545.1
(22) Date of filing: 10.03.2015
(51) Int. Cl.: B64C 39/02

(54) **ROTATING-WING DRONE, WITH INTRINSICALLY PROTECTIVE AND ACCIDENT PREVENTION SUPPORTING STRUCTURE**
DREHFLÜGLER-DRONE MIT INTRINSISCH-SCHUTZENDE UND UNFALL-HINDERNDE TRAGSTRUKTUR
DRONE A VOILURE TOURNANTE AVEC STRUCTURE DE PROTECTION INTRINSIQUE ET DE PREVENSION D'ACCIDENTS.

(30) Priority: 12.03.2014 IT MI20140394
(43) Date of publication of application: 18.01.2017
(73) Proprietor: AG Project S.r.l., 20149 Milano (IT)
(72) Inventor: GUZZARDI, Andrea, I-22070 Binago (CO) (IT); GUFFANTI, Marco, I-22066 Mariano Comense (CO) (IT); TARTARINI, Gian Luca, I-22100 Como (IT); CANEPA, Guido, I-22100 Como (IT)
(74) Representative: Zanoli, Enrico
(86) International application number: PCT/EP2015/054984
(87) International publication number: WO 2015/135951

(56) References cited:
- US-A1- 2003 040 247
- US-A1- 2012 234 969
- US-A1- 2013 233 964

## Description

The present invention relates to a rotating-wing drone with a protective and accident prevention structure.

Rotating-wing drones are suitable for numerous civil uses such as remote sensing, photogrammetry, environmental and cultural heritage monitoring and the like. For these purposes, the drone is equipped with equipment for detecting data, taking photographic or video images, and is also equipped with flying devices that can be suitably adjusted and controlled remotely.

At the present state of the art some problems concerning safe use of drones either have still not been resolved or have not been satisfactorily resolved.

In particular, there exists a problem related to the safety of persons who may accidentally come into contact with the drone during its flight, and a problem related to objects and/or structures that may accidentally come into contact with the drone during its flight. In both cases, this accidental contact, above all with the propellers, can cause serious injury to persons and damage to objects. Hereinafter in this description the term "propeller" and the term "rotating-wing" have the same meaning and are used interchangeably.

A particular case of high risk of damage to objects is represented by the use of the rotating-wing drone to monitor architectural and artistic treasures, for example when taking video and photographic images inside churches, historical buildings, monuments and the like. In these cases, the drone is extremely useful for reaching remote points that are inaccessible to humans, but at the same time there is the risk of being unable to control its flight adequately or of an engine failure or a fault in the control systems, causing the drone to impact against statues, paintings or other works of art, with potentially serious consequences for the work of art.

WO 2011/058257 A1 describes a supporting block for the motor of a rotating-wing drone.

The structure of this drone comprises a central block made of polypropylene and four motors connected to the central block by carbon tubes, forming the actual supporting structure of the drone. In case of breakage of the structure after an impact the carbon tubes included in the structure can damage objects or hurt people.

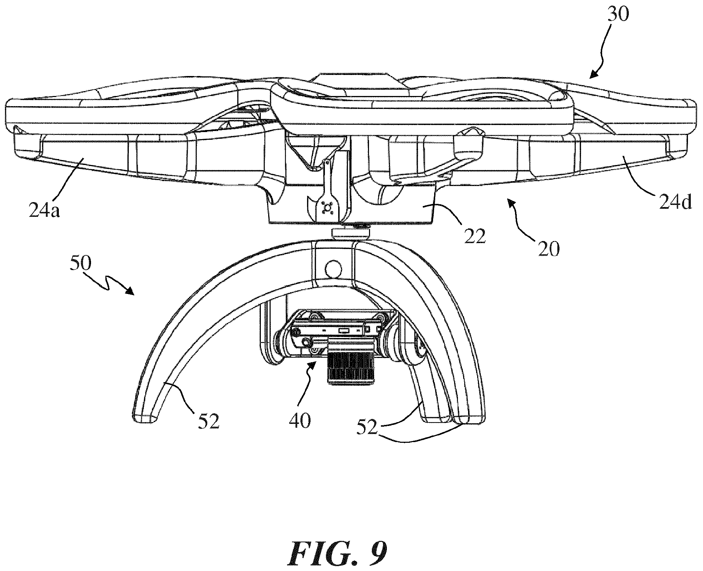

US 2013/0233964 A1 discloses a tethered drone for surveillance or data gathering. Tethering a drone to a ground station is a proven method of restricting the flight space so that a fly away will not occur. The horizontal flight space, however, can be greatly limited because of obstacles. Moreover, tethering does not overcome risks of damage to people or objects in case of fall of the drone, particularly because of the full exposure of the rotating wings (Fig. 9a).

US 2003/0040247 A1 discloses a toy airplane with a fuselage made of a foam material such as EPS or EPP foam to provide durability and reduce production costs. No safety issue is considered in the design of this toy airplane, for example the propellers are fully exposed and can hit objects or people in case of loss of control or fall of the airplane.

US 2012/0234969 A1 discloses a navigation electronic card support for a rotary wing drone.

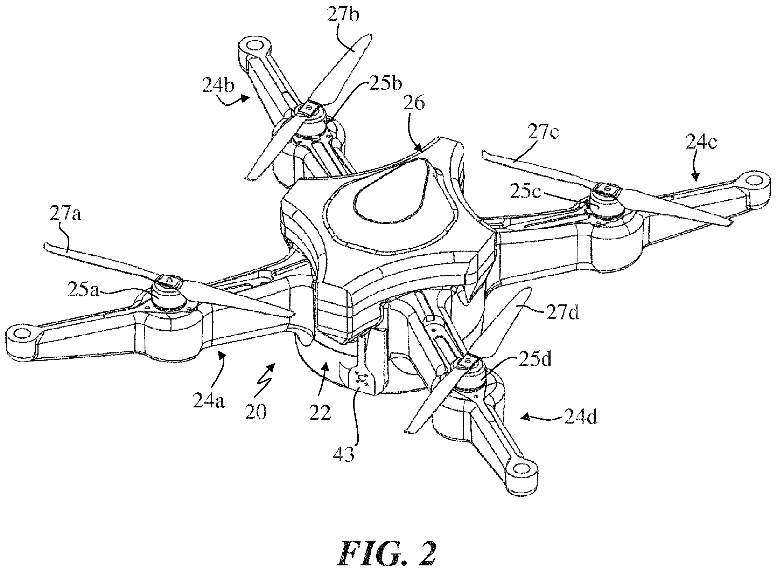

The structure of the drone includes carbon tubes (Fig. 2b, paragraph [0045]), which can hit and damage objects or hurt people in case of loss of control or fall of the drone.

The drones described in the cited documents are not designed to prevent damage to objects or injuries to people in case of accidental impact or fall of the drone. Also, they are not designed to protect the propellers from accidental contact with objects. Safety is thus an issue substantially unsolved.

Therefore, an object of the present invention is to produce a rotating-wing drone that is firstly improved from the viewpoint of accident prevention, i.e. such as to prevent injuring any person that might accidentally come into contact with the drone during its flight.

Another object of the invention is to produce a rotating-wing drone that is able to prevent, or minimize, damage to any object, above all to objects of artistic value, which might accidentally come into contact with the drone during its flight.

A further object of the invention is to produce a rotating-wing drone having a light structure, capable of taking off and landing even from/on low density surfaces, such as aquatic surfaces, muddy or soft ground and the like.

A further object of the invention is to produce a rotating-wing drone having a structure and accessory elements formed by only a few parts or in once piece, to limit possible assembly errors and complicated periodic checks. In fact, the complexity of assembling current drones and of checks that must be performed represents a considerable source of risk.

The aforesaid and other objects and advantages of the invention are achieved with a rotating-wing drone with a supporting structure comprising at least a first level (20) comprising a central part (22) from which there extend radially from 3 to 12 coplanar arms (24) designed for mounting the motors and the related propellers (27) of the drone, characterized in that:
- said central part (22) and said radially extending arms (24) of said first level supporting structure (20) form an integral and unitary body made of an expanded resin having a density of from 20 to 100 g/l measured according to the standard ISO 845:2006;
- said first level of said supporting structure (20) comprises also from 3 to 12 protective rings (35) arranged around a central hub adapted to be fastened onto the central part (22) of said first level supporting structure (20), each of said protective rings (35) being arranged around each of said propellers (27) without said propellers (27) projecting vertically from said protective rings (35), so that said propellers (27) are laterally shielded by said protective rings (35);
- said protective rings (35) form an integral and unitary body (30) also made of an expanded resin having a density of from 20 to 100 g/l measured according to the standard ISO 845:2006; whereby said propellers (27) are protected from a lateral impact.

According to another aspect of the invention, each of said protective rings comprises means for fastening to each of said arms of the supporting structure of the drone.

According to another aspect of the invention the supporting structure of said drone comprises a second level mounted on said first level, said second level comprising a central part from which there extend radially from 3 to 12 arms designed for mounting the motors and the related propellers of the drone, the propellers of said first level of said supporting structure being mounted on the upper side of said arms and the propellers of said second level of said supporting structure being mounted on the lower side of said arms,

Said arms of said second level of the supporting structure of the drone may or may not comprise protective rings.

In the embodiment in which said second level of the supporting structure of the drone comprises protective rings, each of said protective rings is arranged around each of said propellers without said propellers projecting vertically from said protective rings, so that said propellers are laterally shielded by said protective rings; said protective rings also being made of an expanded resin having a density of from 20 to 100 g/l measured according to the standard ISO 845:2006; whereby said propellers are protected from a lateral impact.

Preferred embodiments of the rotating-wing drone according to the invention have 4, 6 or 8 propellers at each level.

According to another aspect of the invention the rotating-wing drone comprises a base consisting of a plurality of supporting legs or of a different supporting element, adapted to be fastened to the bottom of the central part of the supporting structure of the drone, made of an expanded resin having a density of from 20 to 100 g/l measured according to the standard ISO 845:2006.

The invention is now illustrated with reference to the accompanying drawings, provided by way of non-limiting example, wherein:
- Fig. 1 is a perspective view of a one-level quadcopter drone provided with protective rings according to the invention;
- Fig. 2 is a perspective view of the drone of Fig. 1 in which the protective rings have been removed;
- Fig. 3 is an exploded perspective view of some components of the drone of Fig. 1;
- Fig. 4 is a bottom perspective view only of the supporting structure of the drone of Fig. 1;
- Figs. 5A and 5B are partly sectional exploded perspective views of some components of the drone of Fig. 1;
- Fig. 6 is a schematic perspective view of some details of the drone of Fig.1;
- Fig. 7 is a bottom perspective of the drone of Fig. 1;
- Fig. 8 is a top perspective view of the drone of Fig. 1 equipped with camera;
- Fig. 9 is an elevational view of a drone according the invention equipped with a camera and with a base with supporting legs;
- Fig. 10 is a top perspective view of a drone according to the invention equipped with a supporting plate;
- Fig. 11 is a perspective view of a camera with support adapted for mounting on the drone of Fig. 1;
- Figures 12-16 are views of a first embodiment of a two-level drone according to the invention;
- Figures 17-20 are views of a second embodiment of a two-level drone according to the invention;
- Fig. 21 is a schematic side view of an impact of the drone of Fig. 1 against a person;
- Fig. 22 is a top view of the impact of Fig. 21; and
- Figs. 22A, 22B and 22C show different operative positions of a drone according to the invention.

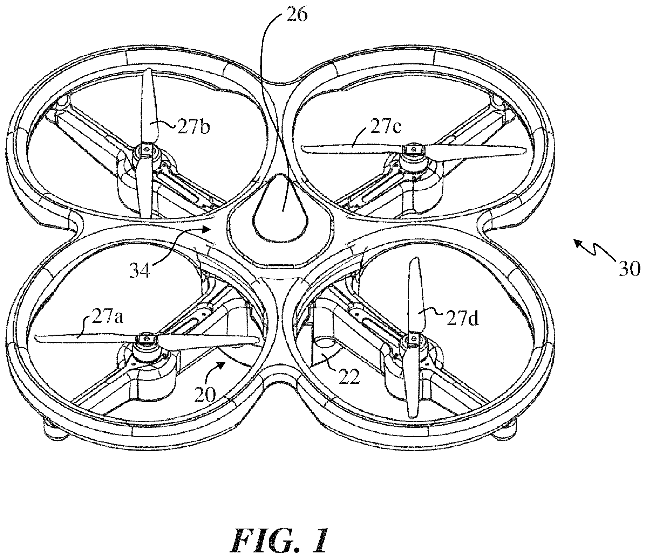

With reference to Figs. 1, 2, 3 and 8, there is illustrated a quadcopter drone having a one level supporting structure 20 comprising a central part 22 from which there extend radially four coplanar arms 24a, 24b, 24c and 24d of the same length and angularly spaced apart by 90° with respect to one another. The central part 22 is closed at the top by a cover 26 and at the bottom by a plate 28.

In the centreline of the arms 24a, 24b, 24c and 24d (at times indicated as a whole with 24) there are mounted the motors 25a, 25b, 25c and 25d that support and operate the related propellers 27a, 27b, 27c and 27d of the drone.

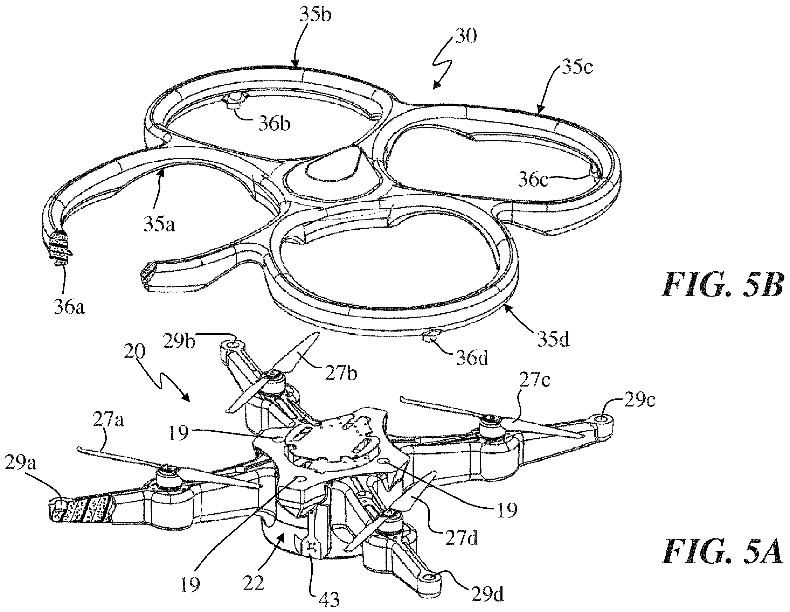

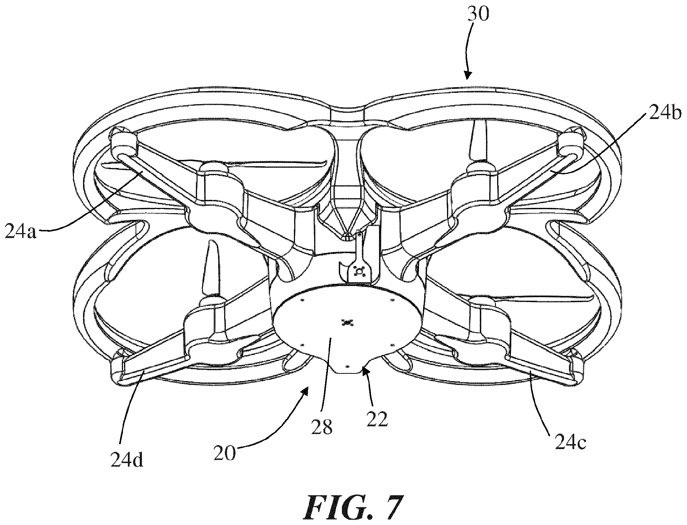

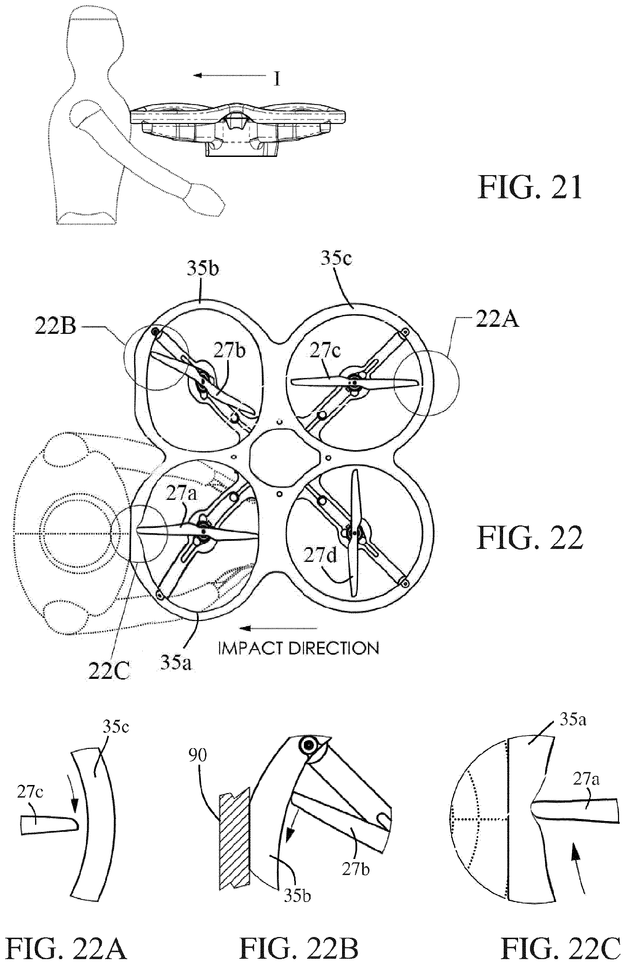

Figs. 1 and 7 show that the drone comprises an integral and unitary body 30 for protecting the propellers, consisting of 4 coplanar rings 35a, 35b, 35c and 35d indicated in Fig. 5B, each adjacent to other two rings so as to form a four-leaf clover figure, the central part of which is adapted to be superimposed on and fastened onto the central part 22 of the supporting structure 20 of the drone. The structure 30 for protecting the propellers is produced in a shape and dimension such that, when mounted on the supporting structure 20 of the drone, the rings 35a, 35b, 35c and 35d are centred around each motor 25 and propeller 27, with the thickness of each ring 35 adequate to provide a lateral protection against accidental contact of the propeller enclosed therein with respect to an external object. In particular, the propellers do not project vertically, above or below, the rings 35a, 35b, 35c and 35d, so that the rings shield objects or people from entering into contact with the propellers, as it will be explained in more detail in the present description with reference to Figures 21 and 22.

According to the invention, both the supporting structure 20 and the structure for protecting the propellers 30 are integral and unitary structures, i.e. produced in one piece, made of an expanded resin or foam having a density of from 20 to 100 g/l measured according to the standard ISO 845:2006. This standard relates to the determination of the apparent density of cellular plastics and rubbers. Preferably, the density varies from 25 to 80 g/l, more preferably from 30 to 60 g/l. The expanded resin is preferably selected in the group consisting of expanded polypropylene, expanded polyethylene, expanded polystyrene and expanded polyurethane. Preferably, the resin is made of expanded polypropylene (EPP) having a density of from 25 to 80 g/l, more preferably from 30 to 60 g/l.

The production of these expanded resin structures having the aforesaid characteristic of density, suitably dimensioned as a function of the weights of the components of the drone and of the characteristics of the flight for which the drone is designed, makes it possible to obtain drones of limited total weight, but above all drones with high accident prevention characteristics and with less risk of damaging objects in the event of accidental impact.

The expanded resin structures according to the invention are produced according to known processes, as a rule from pre-expanded resin granules or beads, with a typical dimension of from 0.2 to 8 mm. The pre-expanded granules, containing residual quantities of expanding agents, are placed in a mold having the shape of the desired structure. As a result of heating, the residual expanding agent is vaporized and the granules undergo a further expansion and softening step until they are fused together in the shape of the mold. This gives rise to a very light structure with mainly closed cells and optimal mechanical characteristics. By appropriately adjusting the process parameters and the quantity of pre-expanded resin fed into the mold it is possible to obtain structures with the desired density within an interval ranging from 20 to 100 g/l.

The supporting structure 20 and the structure for protecting the propellers 30 are structures produced in one piece, but which can contain special inserts for fastening motors or other parts.

In the case of structures made of EPP, some typical mechanical properties are indicated in Table 1.

**Table 1**

| **PHYSICAL PROPERTIES** | **TEST METHOD** ISO 845:2006 | **UNIT** | **DENSITIES MEASURED** | | | | | | |
|---|---|---|---|---|---|---|---|---|---|
| | | **g/l** | **20** | **30** | **40** | **50** | **60** | **80** | **100** |
| **Tensile strength** | ISO 1798 DIN 53571 | kPa | 270 | 450 | 560 | 670 | 760 | 960 | 1150 |
| **Tensile elongation** | ISO 1798 DIN 53571 | % | 21 | 20 | 19 | 18 | 17 | 15 | 13 |
| **Compressive strength** | ISO 844 | kPa | 80 | 150 | 210 | 275 | 340 | 500 | 700 |
| **25% deformation** | DIN 53421 | | | | | | | | |
| **50% deformation** | Test speed | | 150 | 200 | 300 | 370 | 475 | 700 | 960 |
| **75% deformation** | 5 mm/min | | 350 | 460 | 600 | 800 | 1000 | 1600 | 2300 |
| **Permanent compressive deformation 25% deformation 22H - 23°C** | ISO 1856 C Stabilization 24H | % | 13.5 | 12.5 | 12.0 | 12.0 | 11.5 | 11.5 | 11.5 |

The supporting structure according to the invention is provided with housings for mounting and fastening the functional components of the drone, such as motors, propellers, cables, electronic components for adjusting and controlling flight and for communicating with the pilot on the ground, supports for photographic or video equipment and the related handling systems.

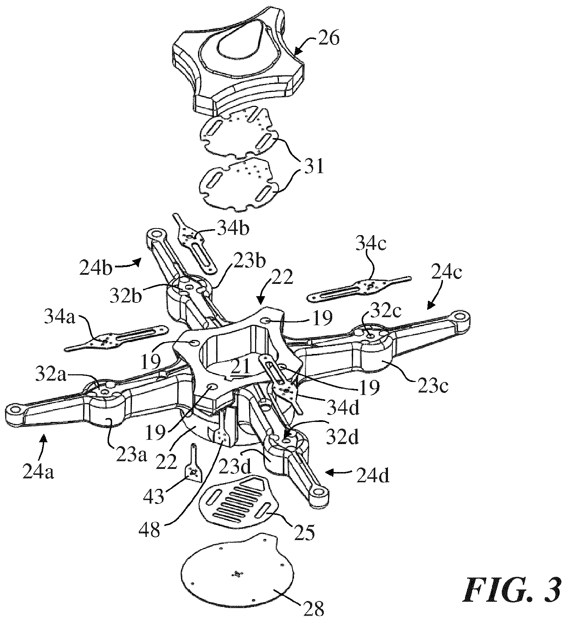

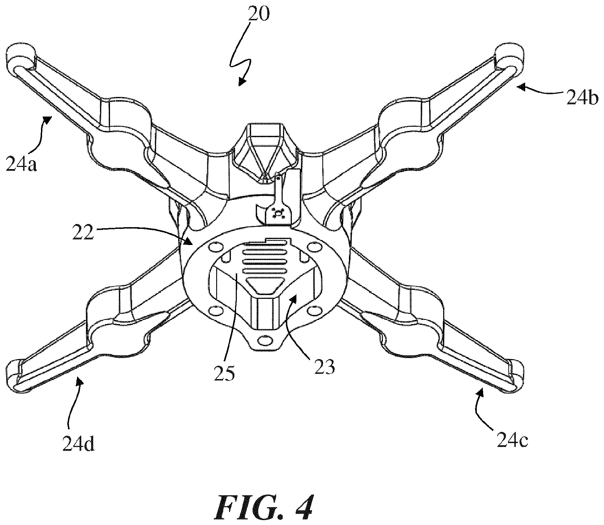

Figs. 3 and 4 schematically illustrate the housings - and more in general the parts - used for mounting the various functional components of the drone.

Firstly, the central part 22 of the supporting structure 20 is provided with an upper cavity 21 (Fig. 3) and a lower cavity 23 (Fig. 4) adapted to house supporting plates 25, 31 for the aforesaid electrical and electronic components.

The arms 24a, 24b, 24c and 24d are provided in their middle portion with expansions or enlargements 23a, 23b, 23c and 23d, adapted to define at the top cavities 32a, 32b, 32c and 32d for housing supporting plates 34a, 34b, 34c and 34d. These plates are used to mount the motors 25a, 25b, 25c and 25d with the related propellers 27a, 27b, 27c and 27d, and to provide the electrical connections for operation of these motors. For this purpose, there are also used cables, not shown, housed in the cavity extending along the arms 24 to connect the motors to the other electrical and electronic components for adjusting and controlling the flight, which are located in the cavities 21 and/or 23 of the central part 22.

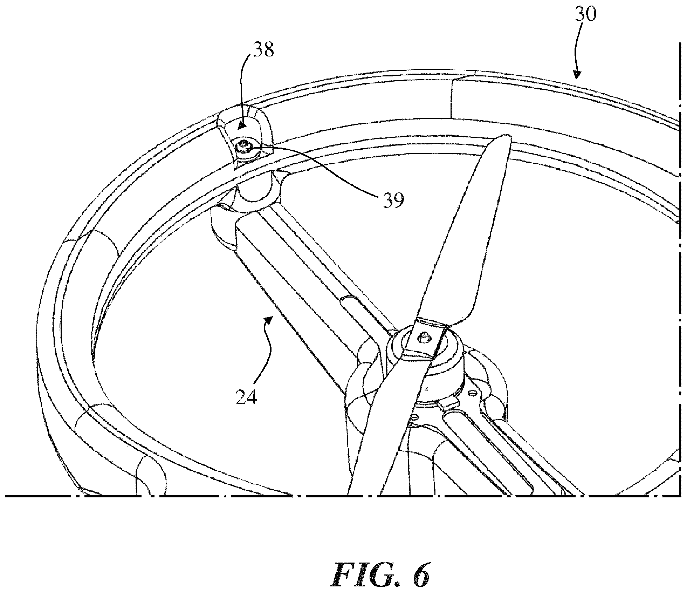

Figs. 5A, 5B and 6 show some embodiments of the means for connecting and fastening the supporting structure 20 of the drone and the structure 30 for protecting the propellers. Both structures are integral and unitary, i.e. produced in one piece from pre-expanded resin granules.

With reference to Fig. 5B, the structure 30 for protecting the propellers is formed of four rings 35a, 35b, 35c and 35d (at times indicated as a whole with 35), arranged in the shape of a four-leaf clover, and is provided with cylindrical pins 36a, 36b, 36c and 36d (at times indicated as a whole with 36) extending downward from each of the corresponding rings 35.

With reference to Fig. 5A, at the end of each arm 24a, 24b, 24c and 24d there is provided a hole 29a, 29b, 29c and 29d (at times indicated as a whole with 29), of dimension corresponding to the dimension of the pins 36, which are inserted into the holes 29 using light force, thereby producing the connection and the removable fastening of the supporting structure 20 of the drone to the structure 30 for protecting the propellers.

Likewise, also the central part of the structure 30 for protecting the propellers is provided with cylindrical pins (not shown) adapted to be inserted into corresponding holes 19 (Figs. 3 and 5A) provided in the central part 22 of the supporting structure 20, so as to further strengthen the connection between supporting structure 20 and structure 30 for protecting the propellers.

Fig. 6 shows another embodiment of the means for connecting and fastening the supporting structure 20 of the drone and the structure 30 for protecting the propellers. In this embodiment, the structure 30 is provided with appropriate seats 38 for housing screws 39, and related inserts, which are screwed onto the end of the corresponding arm 24. Also in this case, removable fastening of the two parts is obtained.

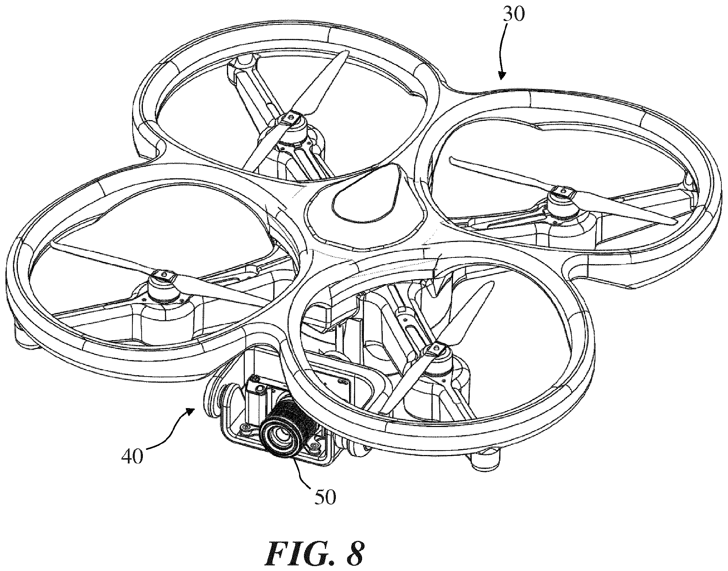

Figs. 8, 9 and 11 illustrate various methods of fastening photographic equipment to the supporting structure of the drone according to the invention.

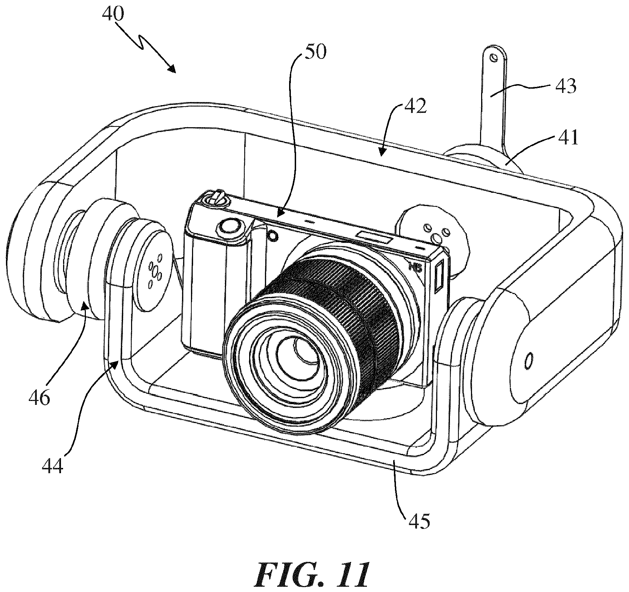

Fig. 11 shows a support 40 for a camera 50. The support 40 is made of an expanded resin having a density of from 20 to 100 g/l, just as the other components of the structure of the drone according to the invention. The support 40 consists of a first fork 42 connected to a motor 41 rotatably mounted on a plate 43, in turn fastened to a suitable point of the structure 20 of the drone. Inside the fork 42 there is rotatably mounted a second fork 45 operated by a motor 46, so that the combined movements of the two forks 42, 45 allow the camera to adopt a plurality of desired positions.

The rear supporting plate can be mounted laterally to the central part 22 of the structure 20 of the drone, as illustrated in Fig. 8. More in particular, the plate 43 is also shown in Figs.2, 5A and 3. In this last figure, the corresponding portion 48 of structure of the drone in which the plate is fastened is also visible.

It is evident that the support 40 can also be used to support other equipment besides equipment for recording images, such as equipment for remote sensing, for taking samples and the like, if necessary modifying the support 40 as a function of the particular equipment to be used.

In an embodiment, shown in Fig.9, the rotating-wing drone comprises a base 50 consisting of a plurality of supporting legs 52. The base 50 is fastened to the bottom side of the plate 28 shown in Fig. 3, and is also made of an expanded resin having a measured density of from 20 to 100 g/l, just as the other parts of the structure of the drone. In this embodiment, the photographic equipment, or video camera, 40 is preferably fastened to the bottom of the base 50, as shown in Fig.9.

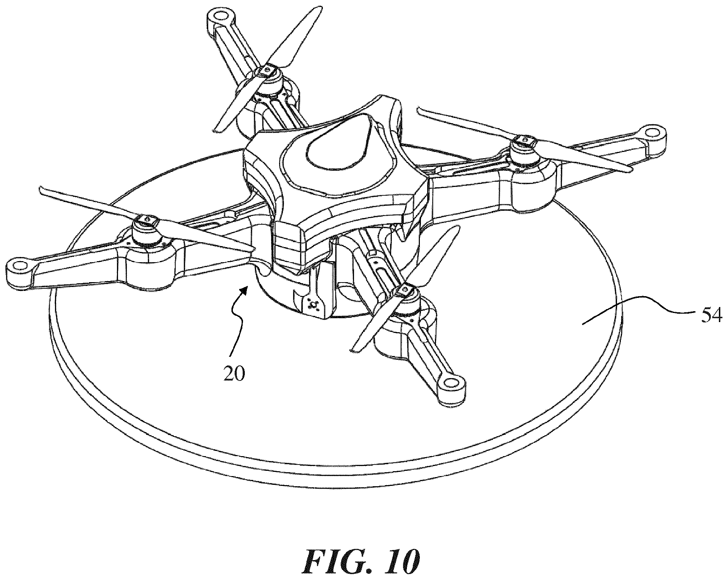

In a different embodiment, shown in Fig.10, the rotating-wing drone comprises a base consisting of a supporting element in the form of a supporting plate 54, adapted to be fastened to the bottom of the central part of the supporting structure of the drone, once again made of an expanded resin having a density of from 20 to 100 g/l. This embodiment of the supporting base is suitable for the case in which the drone takes off from or lands on aquatic or low density surfaces, allowing the weight to be distributed over a much larger area than the area formed by the supporting area of the legs 52.

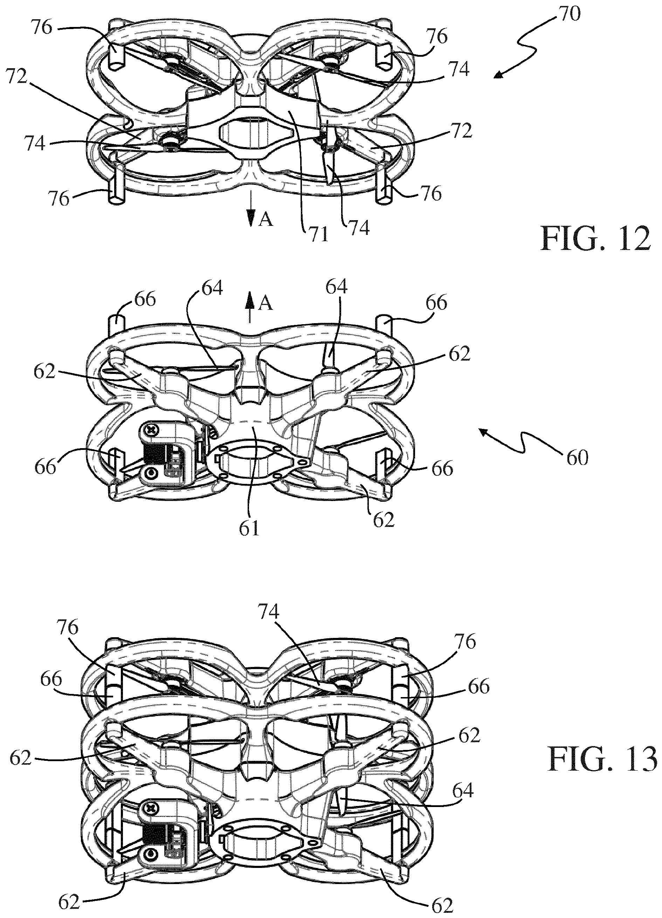

Figures 12-16 are views of a first embodiment of a two-level drone according to the invention.

Figs. 12 and 13 are perspective views of a drone 60 of the general type described in Figs. 1-11, on which a second drone 70 is mounted, so that the whole drone supporting structure becomes a two-level structure. Both the first level 60 and the second level 70 structures comprise a central part 61 and 71, respectively, from which coplanar arms 62, 72 extend radially. Both the first level 60 and the second level 70 drone structures are made of an expanded resin having a density of from 20 to 100 g/l measured according to the standard ISO 845:2006. As the first level structure, also the second level structure 70 comprises an integral body consisting of protective rings 75. The second level structure 70 is mounted on the first level structure 60 as shown by the arrows A of Fig. 12 by coupling means 66 and 76, for example pins and corresponding holes, as described with reference to Fig. 5A and 5B.

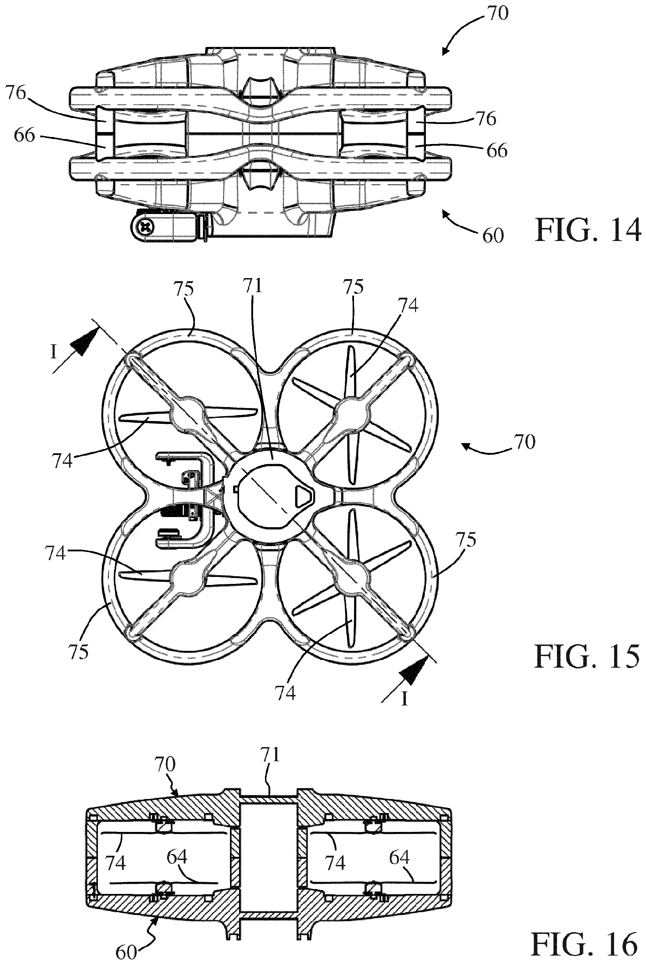

Fig. 14 is a side view of the two-level drone and Fig. 15 is a view from the top of the same.

Fig. 16 is a section along the line I-I of Fig. 15.

Figs. 12-16 show the embodiment in which the propellers 64 of the first level supporting structure 60 are mounted on the upper side of the arms 62, while the propellers 74 of the second level supporting structure 70 are mounted on the lower side of said arms 72.

Fig. 16 shows that the propellers are faced one to the other and the body formed by the protective rings shield the propellers and avoid accidental contact of the propellers with an object or a person.

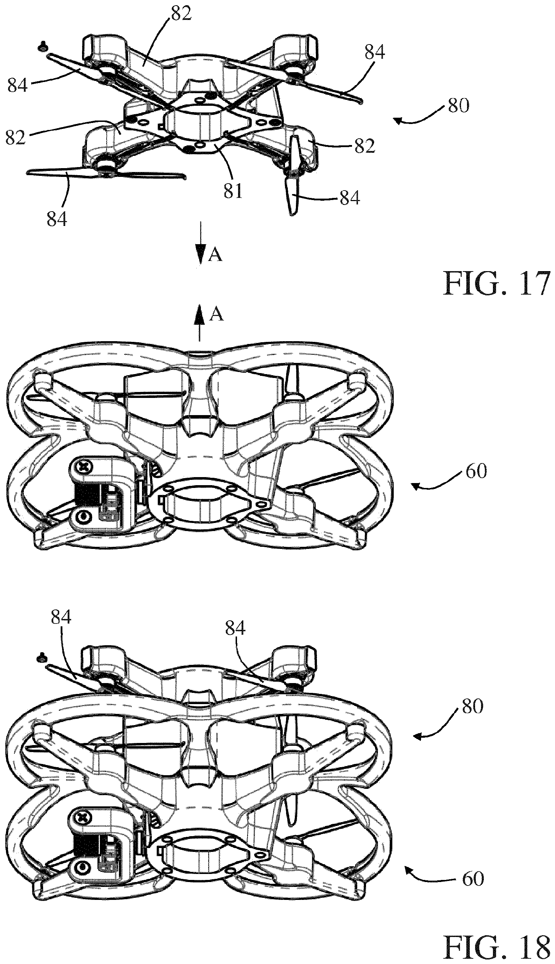

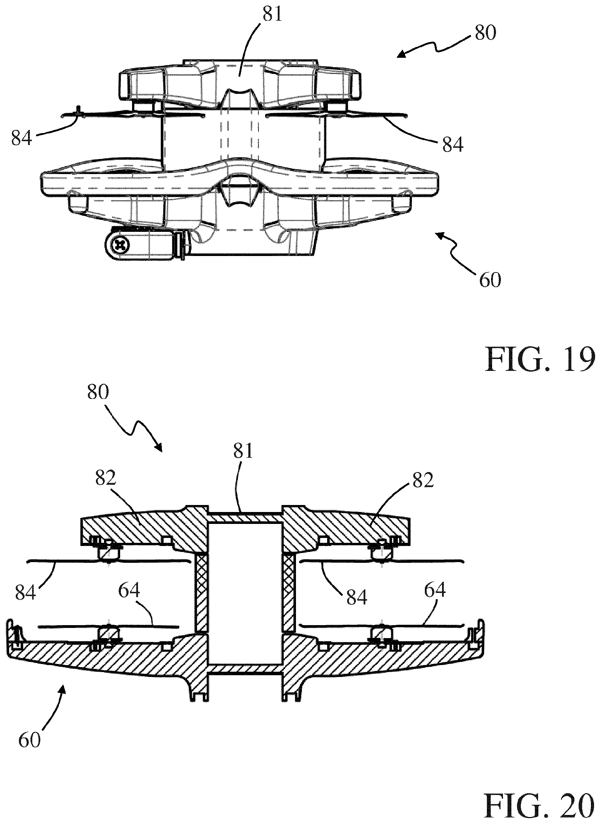

In a different embodiment of a two-level drone shown in Figs. 17-20 the second level supporting structure does not comprise protective rings. Fig. 20 is a schematic vertical section of the drone shown in Fig. 19.

In this embodiment the first level supporting structure is the same as described with reference to Figs. 12-16 and is still designated with the reference number 60. Also in this case the second level 80 supporting structure comprises a central part 81 from which coplanar arms 82 extend radially. The second level supporting structure 80 is thus like the second level supporting structure 70 described with reference to Figs. 12-16 but without the protective rings shielding the propellers. As shown in particular in Figs. 19 and 20, however, the overall structure of the drone still ensures a certain protection in case of lateral impact since the protective rings of the first level structure project outwardly with respect to the unprotected propellers 84 of the second level structure, thereby representing a first contact surface against a possible obstacle accidentally encountered during the flight.

Figs. 21 is a lateral view and Fig. 22 is a top view that schematically show a situation of impact of the drone of Fig. 1 against a person as shown by the arrow I.

Figs. 22A, 22B and 22C show details of a propeller and the associated protective ring in different situations of non contact or contact with a person or an obstacle.

Fig. 22A shows a situation of normal flight without any impact of the drone with an obstacle.

The detail shows that propeller 27c is out of contact with protective ring 35c and can freely rotate, as shown by the arrow.

Fig. 22B shows a situation of medium intensity impact of the drone with an obstacle 90. In this case the protective ring 35b is slightly deformed by the contact with the obstacle and the propeller 27b comes into a superficial contact with the ring 35b. Thanks to the expanded resin material forming the protective ring, such contact, however, has a braking effect and causes a reduction in the speed of rotation of the propeller. Breaking of the structure is avoided and the object 90 is not damaged. This is particularly important if the object is a painting or another valuable piece of art. Also, the drone can continue to fly.

Fig. 22C shows a situation of strong impact of the drone with a person. In this case the protective ring 35a is significantly deformed by the contact and the propeller 27a penetrates into the ring 35a. The expanded resin material forming the protective ring, however, absorbs the penetration of the propeller and stops its rotation. Breaking of the structure is still avoided and the person is not injured.

The same situation occurs with a two-level drone in which both levels have a protective body formed by rings arranged around the propellers. The protection is less effective if the protective rings are present only in the first level supporting structures, depending also on the lateral inclination of the drone during the impact. In an impact in which the plane of the drone is at about 90° with respect to the obstacle, as shown in Fig. 22, the protective rings of the first level structure would still ensure a shielding of the person from the propellers of second level structure.

From the description provided above, it is therefore evident that the structure of the drone according to the invention is characterized by a combination of light weight, structural strength and related flexibility. This enables the drone to absorb impacts without causing injury to persons or damage to objects resulting from accidental impacts, an important feature of it being the frangible material the structure is made of (expanded resin with a density of from 20 to 100 g/l measured according to the standard ISO 845:2006). Since the drone does not have a metal frame within the expanded resin structure, the risk that the pieces resulting from a breaking of the drone hurt a person is strongly reduced.

The structure with mainly closed cells and the compact nature thereof, obtained by the molding process through secondary expansion in a mold and fusing together of the expanded granules, is such as to enable different parts to be screwed directly into the expanded material, without the need to include inserts designed for fastening of these parts in the mold.

Some embodiments of the invention have been described, but it is susceptible to numerous modifications and variants falling within the scope of the inventive concept defined in the appended claims.

## Claims

1. Rotating-wing drone with a supporting structure comprising at least a first level (20) comprising a central part (22) from which there extend radially from 3 to 12 coplanar arms (24) designed for mounting the motors and the related propellers (27) of the drone, wherein
- said first level of said supporting structure (20) comprises also from 3 to 12 protective rings (35) arranged around a central hub adapted to be fastened onto the central part (22) of said first level supporting structure (20), each of said protective rings (35) being arranged around each of said propellers (27) without said propellers (27) projecting vertically from said protective rings (35), so that said propellers (27) are laterally shielded by said protective rings (35); **characterised in that**:
- said central part (22) and said radially extending arms (24) of said first level supporting structure (20) form an integral and unitary body made of an expanded resin having a density of from 20 to 100 g/l measured according to the standard ISO 845:2006;
- said protective rings (35) form an integral and unitary body (30) also made of an expanded resin having a density of from 20 to 100 g/l measured according to the standard ISO 845:2006; whereby said propellers (27) are protected from a lateral impact.

2. Rotating-wing drone according to claim 1, **characterized in that** said rings (35) of said unitary body (30) comprise fastening means (36, 39) to each of said arms (24) of the supporting structure of the drone.

3. Rotating-wing drone according to claim 1 or 2, **characterized in that** said first level supporting structure (20) comprises from 4 to 8 arms (24) and said unitary body (30) for protecting the propellers comprises from 4 to 8 rings, said rings (35) being of the same number as the number of said arms (24).

4. Rotating-wing drone according to any one of the preceding claims, **characterized in that** it comprises a base (50) consisting of a plurality of supporting legs (52) or of a supporting element (54), adapted to be fastened to the bottom of the central part (22) of the first level supporting structure (20) of the drone, said base (50) being made of an expanded resin having a density of from 20 to 100 g/l measured according to the method ISO 845:2006.

5. Rotating-wing drone according to any one of the preceding claims, **characterized in that** said central part (22) of said first level supporting structure (20) is provided with an upper cavity (21) and with a lower cavity (23) adapted to house supporting plates (25, 31) for the electrical and electronic components of said drone.

6. Rotating-wing drone according to any one of the preceding claims, **characterized in that** said arms (24) are provided with supporting plates (34a, 34b, 34c, 34d) spaced apart from each other and embedded inside said arms.

7. Rotating-wing drone according to any one of the preceding claims, **characterized in that** said arms (24) are provided with cavities (32) to house said mounting plates (34) for the motors and for electrical cables.

8. Rotating-wing drone according to any one of the preceding claims, **characterized in that** it comprises means (40) for supporting and fastening equipment (50) for recording images or detecting data or taking samples, said supporting and fastening means being made of an expanded resin having a density of from 20 to 100 g/l.

9. Rotating-wing drone according to any one of the preceding claims, **characterized in that** said supporting structure comprises a second level (70, 80) supporting structure, said second level supporting structure (70, 80) being mounted on said first level supporting structure (60), said second level supporting structure (70, 80) comprising a central part (71, 81) from which there extend radially from 3 to 12 arms (72, 82) designed for mounting the motors and the related propellers (74, 84) of the drone, said second level supporting structure (70) being made of an expanded resin having a density of from 20 to 100 g/l measured according to the standard ISO 845:2006.

10. Rotating-wing drone according to claim 9, **characterized in that** the propellers (64) of said first level supporting structure (60) are mounted on the upper side of said arms (62) and the propellers (74, 84) of said second level supporting structure (70, 80) being mounted on the lower side of said arms (72, 82).

11. Rotating-wing drone according to claim 9 or 10, **characterized in that** said second level supporting structure (70) comprises protective rings (75) forming an integral and unitary body, each of said protective rings being arranged around each of said propellers without said propellers projecting vertically from said protective rings, so that said propellers are laterally shielded by said protective rings; said protective rings also being made of an expanded resin having a density of from 20 to 100 g/l measured according to the standard ISO 845:2006; whereby said propellers are protected from a lateral impact.

12. Drone according to any one of the preceding claims, **characterized in that** said expanded resin having a density of from 20 to 100 g/l measured according to the method ISO 845:2006 is selected from expanded polypropylene, expanded polyethylene, expanded polystyrene and expanded polyurethane.

13. Drone according to any one of the preceding claims, **characterized in that** said expanded resin is made of expanded polypropylene having a density of from 25 to 80 g/l, more preferably from 30 to 60 g/l.

## Patentansprüche

1. Drehflügel-Drohne mit einer Trägerkonstruktion, die mindestens eine erste Ebene (20) umfasst, die einen zentralen Teil (22) umfasst, von dem sich radial 3 bis 12 koplanare Arme (24) erstrecken, die zum Montieren der Motoren und der zugehörigen Propeller (27) der Drohne entworfen sind, wobei
- die erste Ebene der Trägerkonstruktion (20) ebenfalls 3 bis 12 Schutzringe (35) umfasst, die um eine zentrale Nabe angeordnet sind, die zur Befestigung an dem zentralen Teil (22) der Trägerkonstruktion (20) der ersten Ebene angepasst ist, wobei jeder der Schutzringe (35) um jeden der Propeller (27) angeordnet ist, ohne dass die Propeller (27) vertikal von den Schutzringen (35) vorstehen, sodass die Propeller (27) durch die Schutzringe (35) seitlich abgeschirmt sind;
**dadurch gekennzeichnet, dass**:
- der zentrale Teil (22) und die sich radial erstreckenden Arme (24) der Trägerkonstruktion (20) der ersten Ebene einen integralen und einheitlichen Körper bilden, der aus einem geschäumten Harz mit einer Dichte von 20 bis 100 g/L, gemessen gemäß der Norm ISO 845:2006, hergestellt ist;
- die Schutzringe (35) einen integralen und einheitlichen Körper (30) bilden, der ebenfalls aus einem geschäumten Harz mit einer Dichte von 20 bis 100 g/L, gemessen gemäß der Norm ISO 845:2006, hergestellt ist; wobei die Propeller (27) vor einem seitlichen Aufprall geschützt sind.

2. Drehflügel-Drohne nach Anspruch 1, **dadurch gekennzeichnet, dass** die Ringe (35) des einheitlichen Körpers (30) Befestigungsmittel (36, 39) zu jedem der Arme (24) der Trägerkonstruktion der Drohne umfassen.

3. Drehflügel-Drohne nach Anspruch 1 oder 2, **dadurch gekennzeichnet, dass** die Trägerkonstruktion (20) der ersten Ebene 4 bis 8 Arme (24) umfasst und der einheitliche Körper (30) zum Schutz der Propeller 4 bis 8 Ringe umfasst, wobei die Ringe (35) aus der gleichen Anzahl wie die Anzahl der Arme (24) sind.

4. Drehflügel-Drohne nach einem der vorstehenden Ansprüche, **dadurch gekennzeichnet, dass** sie eine Basis (50) umfasst, die aus einer Vielzahl von Stützbeinen (52) oder einem Trägerelement (54) besteht, die zur Befestigung an der Unterseite des zentralen Teils (22) der Trägerkonstruktion (20) der ersten Ebene der Drohne angepasst sind, wobei die Basis (50) aus einem geschäumten Harz mit einer Dichte von 20 bis 100 g/L, gemessen gemäß dem Verfahren ISO 845:2006, hergestellt ist.

5. Drehflügel-Drohne nach einem der vorstehenden Ansprüche, **dadurch gekennzeichnet, dass** der zentrale Teil (22) der Trägerkonstruktion (20) der ersten Ebene mit einem oberen Hohlraum (21) und einem unteren Hohlraum (23) versehen ist, die zur Aufnahme von Trägerplatten (25, 31) für die elektrischen und elektronischen Komponenten der Drohne angepasst sind.

6. Drehflügel-Drohne nach einem der vorstehenden Ansprüche, **dadurch gekennzeichnet, dass** die Arme (24) mit voneinander beabstandeten und in den Armen eingebetteten Trägerplatten (34a, 34b, 34c, 34d) versehen sind.

7. Drehflügel-Drohne nach einem der vorstehenden Ansprüche, **dadurch gekennzeichnet, dass** die Arme (24) mit Hohlräumen (32) versehen sind, um die Montageplatten (34) für die Motoren und für elektrische Kabel aufzunehmen.

8. Drehflügel-Drohne nach einem der vorstehenden Ansprüche, **dadurch gekennzeichnet, dass** sie Mittel (40) zum Tragen und Befestigen von Ausrüstung (50) zum Aufzeichnen von Bildern oder zum Erfassen von Daten oder zum Entnehmen von Proben umfasst, wobei das Träger- und Befestigungsmittel aus einem geschäumten Harz mit einer Dichte von 20 bis 100 g/L hergestellt ist.

9. Drehflügel-Drohne nach einem der vorstehenden Ansprüche, **dadurch gekennzeichnet, dass** die Trägerkonstruktion eine Trägerkonstruktion der zweiten Ebene (70, 80) umfasst, wobei die Trägerkonstruktion (70, 80) der zweiten Ebene auf der Trägerkonstruktion (60) der ersten Ebene montiert ist, wobei die Trägerkonstruktion (70, 80) der zweiten Ebene einen zentralen Teil (71, 81) umfasst, von dem sich radial 3 bis 12 Arme (72, 82) erstrecken, die zum Montieren der Motoren und der zugehörigen Propeller (74, 84) der Drohne entworfen sind, wobei die Trägerkonstruktion (70) der zweiten Ebene aus einem geschäumten Harz mit einer Dichte von 20 bis 100 g/L, gemessen gemäß der Norm ISO 845:2006, hergestellt ist.

10. Drehflügel-Drohne nach Anspruch 9, **dadurch gekennzeichnet, dass** die Propeller (64) der Trägerkonstruktion (60) der ersten Ebene auf der oberen Seite der Arme (62) montiert sind und die Propeller (74, 84) der Trägerkonstruktion (70, 80) der zweiten Ebene auf der Unterseite der Arme (72, 82) montiert sind.

11. Drehflügel-Drohne nach Anspruch 9 oder 10, **dadurch gekennzeichnet, dass** die Trägerkonstruktion (70) der zweiten Ebene Schutzringe (75) umfasst, die einen integralen und einheitlichen Körper bilden, wobei jeder der Schutzringe um jeden der Propeller herum angeordnet ist, ohne dass die Propeller vertikal von den Schutzringen vorstehen, sodass die Propeller durch die Schutzringe seitlich abgeschirmt sind; wobei die Schutzringe ebenfalls aus einem geschäumten Harz mit einer Dichte von 20 bis 100 g/L, gemessen gemäß der Norm ISO 845:2006, hergestellt sind; wodurch die Propeller vor einem seitlichen Aufprall geschützt sind.

12. Drohne nach einem der vorstehenden Ansprüche, **dadurch gekennzeichnet, dass** das geschäumte Harz mit einer Dichte von 20 bis 100 g/L, gemessen gemäß dem Verfahren ISO 845:2006, aus geschäumtem Polypropylen, geschäumtem Polyethylen, geschäumtem Polystyrol und geschäumtem Polyurethan ausgewählt ist.

13. Drohne nach einem der vorstehenden Ansprüche, **dadurch gekennzeichnet, dass** das geschäumte Harz aus geschäumtem Polypropylen mit einer Dichte von 25 bis 80 g/L, bevorzugter von 30 bis 60 g/L hergestellt ist.

## Revendications

1. Drone à aile rotative avec une structure de support comprenant au moins un premier levier (20) comprenant une partie centrale (22) de laquelle s'étendent radialement de 3 à 12 bras coplanaires (24) conçus pour le montage des moteurs et des hélices liées (27) du drone, dans lequel
- ledit premier levier de ladite structure de support (20) comprend aussi de 3 à 12 anneaux protecteurs (35) agencés autour d'un moyeu central adapté pour être fixé sur la partie centrale (22) de ladite structure de support du premier levier (20), chacun desdits anneaux protecteurs (35) étant agencé autour de chacune desdites hélices (27) sans que lesdites hélices (27) ne fassent saillie verticalement desdits anneaux protecteurs (35), de sorte que lesdites hélices (27) soient latéralement protégées par lesdits anneaux protecteurs (35) ;
**caractérisé en ce que** :
- ladite partie centrale (22) et lesdits bras (24) s'étendant radialement de ladite structure de support du premier levier (20) forment un corps intégral et unitaire fabriqué en une résine expansée présentant une densité de 20 à 100 g/l mesurée selon la norme ISO 845:2006 ;
- lesdits anneaux protecteurs (35) forment un corps intégral et unitaire (30) fabriqué aussi en une résine expansée présentant une densité de 20 à 100 g/l mesurée selon la norme ISO 845:2006 ; moyennant quoi lesdites hélices (27) sont protégées d'un impact latéral.

2. Drone à aile rotative selon la revendication 1, **caractérisé en ce que** lesdits anneaux (35) dudit corps unitaire (30) comprennent des moyens de fixation (36, 39) à chacun desdits bras (24) de la structure de support du drone.

3. Drone à aile rotative selon la revendication 1 ou 2, **caractérisé en ce que** ladite structure de support du premier levier (20) comprend de 4 à 8 bras (24) et ledit corps unitaire (30) pour protéger les hélices comprend de 4 à 8 anneaux, lesdits anneaux (35) étant au même nombre que le nombre desdits bras (24).

4. Drone à aile rotative selon l'une quelconque des revendications précédentes, **caractérisé en ce qu'**il comprend une base (50) composée d'une pluralité de jambes de support (52) ou d'un élément de support (54), adapté pour être fixé au fond de la partie centrale (22) de la structure de support du premier levier (20) du drone, ladite base (50) étant fabriquée en une résine expansée présentant une densité de 20 à 100 g/l mesurée selon le procédé ISO 845:2006.

5. Drone à aile rotative selon l'une quelconque des revendications précédentes, **caractérisé en ce que** ladite partie centrale (22) de ladite structure de support du premier levier (20) est dotée d'une cavité supérieure (21) et d'une cavité inférieure (23) adaptées pour loger des plaques de support (25, 31) pour les composants électriques et électroniques dudit drone.

6. Drone à aile rotative selon l'une quelconque des revendications précédentes, **caractérisé en ce que** lesdits bras (24) sont dotés de plaques de support (34a, 34b, 34c, 34d) espacées les unes des autres et intégrées dans lesdits bras.

7. Drone à aile rotative selon l'une quelconque des revendications précédentes, **caractérisé en ce que** lesdits bras (24) sont dotés de cavités (32) servant à loger lesdites plaques de montage (34) pour les moteurs et pour des câbles électriques.

8. Drone à aile rotative selon l'une quelconque des revendications précédentes, **caractérisé en ce qu'**il comprend des moyens (40) de support et de fixation d'un équipement (50) pour enregistrer des images ou détecter des données ou prendre des échantillons, lesdits moyens de support et de fixation étant fabriqués en une résine expansée présentant une densité de 20 à 100 g/l.

9. Drone à aile rotative selon l'une quelconque des revendications précédentes, **caractérisé en ce que** ladite structure de support comprend une structure de support du second levier (70, 80), ladite structure de support du second levier (70, 80) étant montée sur ladite structure de support du premier levier (60), ladite structure de support du second levier (70, 80) comprenant une partie centrale (71, 81) de laquelle s'étendent radialement de 3 à 12 bras (72, 82) conçus pour le montage des moteurs et des hélices liées (74, 84) du drone, ladite structure de support du second levier (70) étant fabriquée en une résine expansée présentant une densité de 20 à 100 g/l mesurée selon la norme ISO 845:2006.

10. Drone à aile rotative selon la revendication 9, **caractérisé en ce que** les hélices (64) de ladite structure de support du premier levier (60) sont montées sur le côté supérieur desdits bras (62) et les hélices (74, 84) de ladite structure de support du second levier (70, 80) étant montées sur le côté inférieur desdits bras (72, 82).

11. Drone à aile rotative selon la revendication 9 ou 10, **caractérisé en ce que** ladite structure de support du second levier (70) comprend des anneaux protecteurs (75) formant un corps intégral et unitaire, chacun desdits anneaux protecteurs étant agencé autour de chacune desdites hélices sans que lesdites hélices ne fassent saillie verticalement desdits anneaux protecteurs, de sorte que lesdites hélices soient protégées latéralement par lesdits anneaux protecteurs ; lesdits anneaux protecteurs étant aussi fabriqués en une résine expansée présentant une densité de 20 à 100 g/l mesurée selon la norme ISO 845:2006 ; moyennant quoi lesdites hélices sont protégées d'un impact latéral.

12. Drone selon l'une quelconque des revendications précédentes, **caractérisé en ce que** ladite résine expansée présentant une densité de 20 à 100 g/l mesurée selon le procédé ISO 845:2006 est sélectionnée parmi le polypropylène expansé, le polyéthylène expansé, le polystyrène expansé et le polyuréthane expansé.

13. Drone selon l'une quelconque des revendications précédentes, **caractérisé en ce que** ladite résine expansée est fabriquée en polypropylène expansé présentant une densité de 25 à 80 g/l, plus de préférence de 30 à 60 g/l.
